# EUROPÄISCHE PATENTSCHRIFT

(11) **EP 0 837 468 B1**
(45) Veröffentlichungstag und Bekanntmachung des Hinweises auf die Patenterteilung: **07.01.2004**
(21) Anmeldenummer: 97203158.7
(22) Anmeldetag: 10.10.1997
(51) Int. Cl.: G11B 19/12

(54) **Elektronisches Informationsplattenwiedergabegerät mit Plattenformatdetektierungsvorrichtung**
Electronic information disk reproducing apparatus with format disk detection subsystem
Appareil de reproduction pour disques informatiques avec système de détection de format de disque

(30) Priorität: 19.10.1996 DE 19643204
(43) Veröffentlichungstag der Anmeldung: 22.04.1998
(73) Patentinhaber: Philips Intellectual Property & Standards GmbH, 20099 Hamburg (DE); Koninklijke Philips Electronics N.V., 5621 BA Eindhoven (NL)
(72) Erfinder: Völkel, Andreas, Röntgenstrasse 24, 22335 Hamburg (DE)
(74) Vertreter: von Laue, Hanns-Ulrich, Dipl.-Ing.

(56) Entgegenhaltungen:
- EP-A- 0 479 188
- EP-A- 0 691 651
- EP-A- 0 691 652
- EP-A- 0 694 923
- US-A- 5 315 570
- PATENT ABSTRACTS OF JAPAN vol. 096, no. 006, 28.Juni 1996 & JP 08 036829 A (NIPPON COLUMBIA CO LTD), 6.Februar 1996,
- PATENT ABSTRACTS OF JAPAN vol. 018, no. 473 (P-1795), 2.September 1994 & JP 06 150524 A (FUJITSU LTD), 31.Mai 1994,
- PATENT ABSTRACTS OF JAPAN vol. 018, no. 121 (P-1700), 25.Februar 1994 & JP 05 307753 A (KYOCERA CORP), 19.November 1993,
- PATENT ABSTRACTS OF JAPAN vol. 018, no. 436 (P-1786), 15.August 1994 & JP 06 131855 A (SONY CORP), 13.Mai 1994,

## Beschreibung

Die Erfindung bezieht sich auf ein elektronisches Gerät zur Wiedergabe von auf Informationsplatten einer ersten Norm und wenigstens einer zweiten Norm gespeicherten Informationen.

Ein derartiges elektronisches Gerät ist beispielsweise aus der US 5,430,553 bekannt. Dieses bekannte Gerät ist für die Wiedergabe von CD-DA, CD-I und CD-I/CD-DA Informationsplatten vorgesehen. In Abhängigkeit des jeweiligen CD-Typs wählt dieses elektronische Gerät jeweils ein verschiedenes Steuerprogramm aus und bietet dem Benutzer jeweils eine unterschiedliche Benutzeroberfläche auf einem Display an.

Es ist Aufgabe der Erfindung, ein Gerät der eingangs genannten Art zu schaffen, welches einfach ansteuerbar und universell einsetzbar ist.

Diese Aufgabe ist erfindungsgemäß dadurch gelöst, daß das elektronische Gerät mittels erster Steuerinformationen eines ersten Formats ansteuerbar ist, daß eine Wandlerschaltung vorgesehen ist, welche bei einer Informationsplatte der zweiten Informationsplattennorm die ersten Steuerinformationen in zweite Steuerinformationen eines zweiten Formats umwandelt, so daß das elektronische Gerät mittels der ersten Steuerinformationen sowohl bei der Wiedergabe der Informationsplatten der ersten Norm als auch bei der Wiedergabe der Informationsplatten der zweiten Norm ansteuerbar ist.

Als erste Steuerinformationen sind die Steuerinformationen bezeichnet, mittels denen die Geräte, die zur Wiedergabe der Informationsplatten der ersten Norm vorgesehen sind, direkt ansteuerbar sind. Als zweite Steuerinformationen sind die Steuerinformationen bezeichnet, mittels denen Geräte, die zur Wiedergabe von auf Informationsplatten der zweiten Norm gespeicherten Informationen vorgesehen sind, direkt ansteuerbar sind.

Das erfindungsgemäße elektronische Gerät ist sowohl für die auf Informationsplatten einer ersten Norm als auch für die auf Informationsplatten einer zweiten Norm gespeicherten Informationen vorgesehen. Das Gerät kann sowohl bei der Wiedergabe der Informationen der ersten Norm als auch bei der Wiedergabe der Informationen der zweiten Norm mittels der ersten Steuerinformationen einheitlich angesteuert werden. Dies wird mittels der Wandlerschaltung realisiert. Wird das Gerät zur Wiedergabe der Informationen der Informationsplatte der ersten Norm verwendet, so werden die ersten Steuerinformationen von der Wandlerschaltung nicht verändert, d.h. sowohl am Eingang der Wandlerschaltung als auch am Ausgang der Wandlerschaltung liegen die ersten Steuerinformationen an. Wird das Gerät zur Wiedergabe von auf Informationsplatten der zweiten Norm gespeicherten Informationen verwendet, so werden dem Eingang der Wandlerschaltung die ersten Steuerinformationen zugeführt, welche mittels der Wandlerschaltung in die zweiten Steuerinformationen des zweiten Formats umgewandelt werden. Dadurch kann das elektronische Gerät sowohl bei der Wiedergabe der ersten Informationsplatten der ersten Norm als auch bei der Wiedergabe der Informationsplatten der zweiten Norm einheitlich mittels der ersten Steuerinformationen angesteuert werden. Diese Vereinheitlichung hat den Vorteil, daß externe Steuergeräte, welche die ersten Steuerinformationen erzeugen, sowohl Geräte, die lediglich für die Wiedergabe von Informationsplatten der ersten Norm vorgesehen sind, als auch Geräte, die für die Wiedergabe von Informationsplatten der ersten Norm und der zweiten Norm vorgesehen sind, ansteuern können.

Die ersten bzw. zweiten Steuerinformationen umfassen als Steuerbefehle insbesondere die Steuerbefehle für den Zugriff auf die einzelnen Abspieleinheiten der Informationsplatten.

Eine vorteilhafte Ausgestaltung der Erfindung ist dadurch gekennzeichnet, daß die Wandlerschaltung dazu vorgesehen ist, bei einer Informationsplatte der zweiten Informationsplattennorm zweite Statusinformationen des zweiten Formats in erste Statusinformationen des ersten Formats umzuwandeln, so daß sowohl bei der Wiedergabe der Informationsplatten der ersten Norm als auch bei der Wiedergabe der Informationsplatten der zweiten Norm die ersten Statusinformationen an einer Ausgangsschnittstelle des elektronischen Gerätes zur Verfügung stellbar sind.

Die Statusinformationen können z.B. Informationen über die Gesamtspielzeit der Informationsplatte, die Spielzeit einzelner Titel, die Restspielzeit oder ähnliches sein.

Die ersten Statusinformationen sind die Informationen, die bei der Wiedergabe der Informationsplatten der ersten Norm an der Ausgangsschnittstelle des elektronischen Gerätes zur Verfügung gestellt werden. Diese ersten Statusinformationen sind dann von einem externen Steuergerät weiterverarbeitbar und können beispielsweise mittels eines Displays des externen Steuergerätes von diesem angezeigt werden.

Die zweiten Statusinformationen sind die Informationen, die bei der Wiedergabe von Informationsplatten der zweiten Norm von der Wiedergabeeinheit an die Wandlerschaltung übermittelt werden. Diese zweiten Statusinformationen, die in dem zweiten Format vorliegen, werden von der Wandlerschaltung in die ersten Statusinformationen des ersten Formats umgewandelt. Diese in das Format der ersten Statusinformationen umgewandelten zweiten Statusinformationen können nun ebenfalls von dem Steuergerät weiterverarbeitet und mittels des Displays des Steuergerätes einheitlich zu den ersten Statusinformationen angezeigt werden.

Mittels der Wandlerschaltung wird es daher möglich, sowohl bei der Wiedergabe der Informationsplatten der ersten Norm als auch bei der Wiedergabe der Informationsplatten der zweiten Norm das gleiche Steuergerät und das gleiche Display zur Anzeige der Statusinformationen zu verwenden.

In weiterer vorteilhafter Ausgestaltung der Erfindung ist vorgesehen, daß die erste Norm die Norm des Compact-Disc-Digital-Audio-Systems ist und die zweite Norm die Norm des Compact-Disc-Video-Systems ist.

Elektronische Geräte, welche Informationsplatten der Norm des Compact-Disc-Digital-Audio-Systems abspielen können, sind sehr weit verbreitet, während Geräte, die Informationsplatten der Norm des Compact-Disc-Video-Systems abspielen können, relativ selten sind. Die Audio-CD-Abspielgeräte sind von der elektronischen Hardware her deutlich einfacher aufgebaut als Geräte, die zur Wiedergabe von CD-Video-Informationsplatten vorgesehen sind.

Bei CD-Audio-Informationsplatten sind die einzelnen Abspieleinheiten als Tracks bezeichnet. Es existiert ein sogenannter Lead-In-Track, in dem ein Inhaltsverzeichnis (Table of Contents: TOC) der einzelnen Tracks abgespeichert ist. Der Track 1 stellt dann die erste Abspieleinheit, z.B. das erste Lied der Audio-CD dar, der Track 2 die zweite Abspieleinheit usw..

Bei Video-Informationsplatten gibt es keinen einheitlichen Umfang mit den Standards. Die einzelnen Abspieleinheiten der Video-CD's entsprechen nicht, wie bei der Audio-CD, den einzelnen Tracks. Es gibt Video-Informationsplatten, die einen Track 1 und einen Track 2 aufweisen, wobei die einzelnen Abspieleinheiten sich innerhalb des Tracks 2 befinden und als Entry 1 bis Entry n bezeichnet werden. Andere Video-Informationsplatten weisen n Tracks auf, wobei der Track 2 die erste Abspieleinheit (Entry 1), der Track 3 die zweite Abspieleinheit (Entry 2) usw. darstellt. Andere Video-Informationsplatten weisen ebenfalls n Tracks auf, wobei jedoch die einzelnen Tracks jeweils mehrere Abspieleinheiten (Entries) aufweisen.

So gibt es z.B. Video-Informationsplatten, deren Track 2 die Abspieleinheit Entry 1 und die Abspieleinheit Entry 2 aufweist.

Für den Benutzer sind in der Regel sowohl bei Audio-Informationsplatten als auch bei Video-Informationsplatten nur die Abspieleinheiten interessant, die für diesen nachvollziehbar z.B. auf der Hülle der Informationsplatte abgedruckt sind. Mittels der erfindungsgemäßen Wandlerschaltung ist es möglich, die einzelnen Abspieleinheiten so auf dem Display des Steuergerätes zur Verfügung zu stellen, wie sie auf der Hülle der Informationsplatte abgedruckt sind.

Eine weitere vorteilhafte Ausgestaltung der Erfindung ist dadurch gekennzeichnet, daß die Wandlerschaltung dazu vorgesehen ist, bei einer Informationsplatte der zweiten Informationsplattennorm ein Inhaltsverzeichnis der Informationsplatte (TOC) zu erstellen, welches die Gesamtanzahl der Wiedergabeeinheiten und die Gesamtspielzeit aller Wiedergabeeinheiten aufweist.

Der Lead-In-Track einer Audio-Informationsplatte enthält eine Audio-TOC, welche jedem einzelnen Track dessen Spielzeit zuordnet und welche zudem eine Gesamtspielzeit aufweist. Eine derart aufgebaute TOC steht bei einer Video-Informationsplatte in der Regel nicht zur Verfügung. Deshalb ist die Wandlerschaltung dazu vorgesehen, aus den zweiten Statusinformationen, die bei der Wiedergabe von Informationsplatten der zweiten Norm an die Wandlerschaltung geliefert werden, ein Inhaltsverzeichnis der Informationsplatte (TOC) zu erstellen, welches der Audio-TOC entspricht. Hierzu wird den einzelnen Abspieleinheiten (Entries) die jeweilige Spielzeit zugeordnet und eine Gesamtspielzeit berechnet.

Das erfindungsgemäße elektronische Gerät kann vorzugsweise zum Empfang der ersten Steuerinformationen von einem Autoradio verwendet werden.

Es gibt auf dem Markt viele Audoradios, welche eine Steuerschnittstelle aufweisen, die zur Ansteuerung von Audio-CD-Abspielgeräten verwendet werden können. Derartige Autoradios können ohne weitere Modifikation auch zur Ansteuerung des erfindungsgemäßen elektronischen Gerätes verwendet werden.

Die Erfindung wird nachfolgend anhand der Zeichnung in den Fig. 1 bis 3 näher erläutert. Es zeigen:
Fig. 1 ein prinzipielles Funktionsschaltbild eines elektronischen Gerätes zur Wiedergabe von Audio- und Video-Informationsplatten mit einer Wandlerschaltung zur Umwandlung von Steuerinformationen und Statusinformationen, welche mit einem Steuergerät gekoppelt ist,
Fig. 2 ein prinzipielles Flußablaufdiagramm der Funktion der Wandlerschaltung beim Einlesen einer Informationsplatte,
Fig. 3 ein prinzipielles Flußablaufdiagramm der Funktionsweise der Wandlerschaltung beim Zugriff auf eine Abspieleinheit einer Audio-CD,
Fig. 4 ein prinzipielles Flußablaufdiagramm der Funktionsweise der Wandlerschaltung beim Zugriff auf eine Abspieleinheit einer Video-CD,

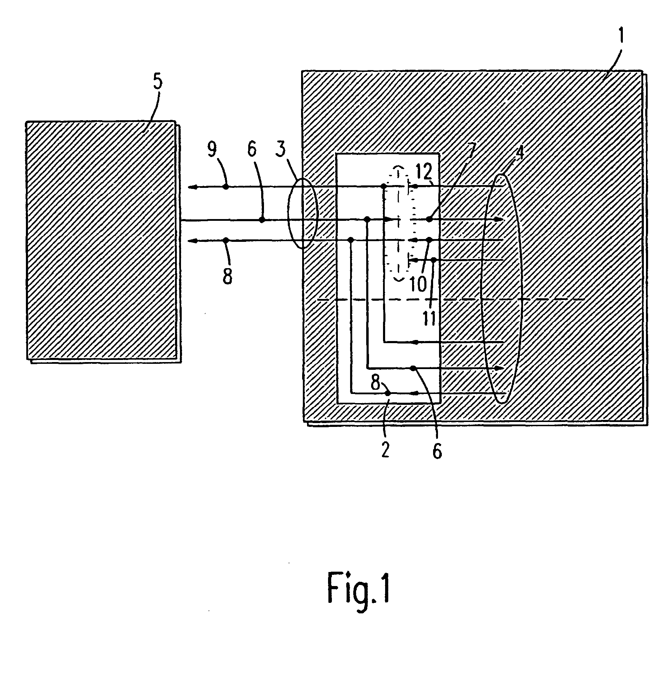

Fig. 1 zeigt ein elektronisches Gerät 1, das sowohl zur Wiedergabe von Audio-Informationsplatten (nachfolgend als Audio-CD's bezeichnet) und zur Wiedergabe von Video-Informationsplatten (nachfolgend als Video-CD's bezeichnet) vorgesehen sind. Das elektronische Gerät 1 weist eine Wandlerschaltung 2 mit einer externen Schnittstelle 3 und einer internen Schnittstelle 4 auf. Die externe Schnittstelle 3 des elektronischen Gerätes 1 ist mit einem Steuergerät 5 gekoppelt. Das Steuergerät 5 sendet als erste Steuerinformationen Track-Kommandos 6 an die externe Schnittstelle 3 der Wandlerschaltung 2. Die Track-Kommandos 6 sind dazu vorgesehen, die einzelnen Abspieleinheiten, die auf der Audio-CD bzw. Video-CD vorhanden sind, jeweils einzeln aufzurufen und abzuspielen. Die Track-Kommandos 6 weisen das Format auf, das zur Ansteuerung der einzelnen Abspieleinheiten einer Audio-CD benötigt wird. Bei einer Audio-CD sind die einzelnen Abspieleinheiten mit den Tracks identisch und können direkt mittels der Track-Kommandos 6 angesteuert werden. Bezüglich der der externen Schnittstelle 3 zugeführten Track-Kommandos 6 hat die Wandlerschaltung 2 nun folgende Funktion:

Wird das elektronische Gerät 1 zur Wiedergabe einer Audio-CD verwendet, so werden die Track-Kommandos 6 von der Wandlerschaltung 2 nicht verändert und direkt an die interne Schnittstelle 4 weitergeleitet. Wird das Gerät jedoch zur Wiedergabe einer Video-CD benutzt, so werden die Track-Kommandos 6 von der Wandlerschaltung 2 in Entry-Kommandos 7 umgewandelt. Diese Entry-Kommandos 7 haben ein derartiges Format, daß damit die einzelnen Abspieleinheiten der Video-CD, welche bei einer Video-CD als Entry bezeichnet sind, angesteuert werden können. Die einzelnen Entries einer Video-CD sind bei einzelnen Video-CD's auf verschiedene Art und Weise den Tracks einer Video-CD zugeordnet. Es gibt Video-CD's, bei denen sich alle Entries als Untereinheiten innerhalb des Tracks 2 befinden. Bei anderen Video-CD's ist der Entry 1 dem Track 2 zugeordnet, der Entry 2 dem Track 3 und der Entry 4 dem Track 4 usw.. Bei wieder anderen Video-CD's existieren mehrere Tracks mit jeweils mehreren diesen Tracks zugeordneten Entries. Dabei ist es beispielsweise möglich, daß der Track 2 die Entries 1 und 2 enthält, der Track 3 die Entries 3, 4 und 5 usw.. Um bei diesen vielen Codierungsvarianten dennoch eine einheitliche Ansteuerung der einzelnen Abspieleinheiten mittels der einheitlichen Track-Kommandos 6 von dem Steuergerät 5 her gesehen zu ermöglichen, erfolgt beim Abspielen einer Video-CD die oben angegebene Umsetzung der Track-Kommandos 6 in die Entry-Kommandos 7.

Von der externen Schnittstelle 3 werden dem Steuergerät 5 Track-Statusinformationen 8 und TOC-Track-Daten 9 zugeführt. Die Track-Statusinformationen 8 sind Informationen über den von dem Steuergerät 5 angewählten Track, z.B. die Gesamtspielzeit des Tracks oder der Titel des Tracks. Wird eine Audio-CD von dem elektronischen Gerät 1 abgespielt, so erhält die Wandlerschaltung 2 an der internen Schnittstelle 4 die Track-Statusinformationen 8 bereits in dem richtigen Format, und die Wandlerschaltung 2 leitet die Track-Statusinformationen 8 direkt ohne weitere Veränderung an die externe Schnittstelle 3 weiter. Wird von dem elektronischen Gerät 1 eine Video-CD abgespielt, so werden der Wandlerschaltung 1 an der internen Schnittstelle 4 Entry-Statusinformationen 10 und Track-Statusinformationen 11 zugeführt. Da die Track-Statusinformationen der Video-CD jedoch nicht die einzelnen Abspieleinheiten repräsentieren, über die der Benutzer informiert werden möchte, werden diese von der Wandlerschaltung 2 nicht an das Steuergerät 5 weitergeleitet. Die Entries der Video-CD repräsentieren die einzelnen Abspieleinheiten, über die der Benutzer informiert werden möchte. Daher werden die Entry-Statusinformationen 10 beim Abspielen einer Video-CD in das Format der Track-Statusinformationen 8 umgewandelt. Wird beispielsweise der Wandlerschaltung 2 bei der Wiedergabe einer Video-CD als Entry-Statusinformation 10 die Gesamtspielzeit des Entries 2 übermittelt, so wird diese von der Wandlerschaltung 2 derart umgewandelt, daß sie als Track-Statusinformation 8 die Gesamtspielzeit des Tracks 2 im Format der Audio-CD an das Steuergerät 5 übermittelt. Von der Wandlerschaltung 2 werden über die externe Schnittstelle 3 dem Steuergerät 5 TOC-Track-Daten 9 übermittelt. Diese TOC-Track-Daten 9 stellen ein Inhaltsverzeichnis (Table of Contents) dar, in der die Spielzeit der einzelnen Tracks, die Gesamtspielzeit aller Tracks, die Gesamtzahl der Abspieleinheiten sowie die Adresse und Position der einzelnen Tracks aufgeführt sind. Diese TOC-Track-Daten sind bei einer Audio-CD in einem Lead-In-Track abgespeichert. Dieser Lead-In-Track wird vor dem Abspielen einer Audio-CD von dem elektronischen Gerät 1 eingelesen, und die entsprechenden TOC-Track-Daten werden an das Steuergerät 5 weitergeleitet. Wird von dem elektronischen Gerät eine Audio-CD abgespielt, so erhält die Wandlerschaltung 2 an der internen Schnittstelle 4 direkt diese TOC-Track-Daten, welche dann von der Wandlerschaltung 2 unverändert an die externe Schnittstelle 3 weitergereicht werden. Wird von dem elektronischen Gerät eine Video-CD abgespielt, so werden der internen Schnittstelle 4 TOC-Entry-Daten 12 zugeführt. Diese TOC-Entry-Daten 12 enthalten Informationen über den Inhalt der Video-CD, sind jedoch nicht zu der TOC der Audio-CD kompatibel. Die TOC-Entry-Daten 12 könnten von dem Steuergerät 5, welches TOC-Track-Daten 9 im Audio-Format erwartet, nicht weiterverarbeitet werden. Insbesondere enthalten die TOC-Entry-Daten 12 kein Inhaltsverzeichnis in der Form, daß den einzelnen Entries, welche bei einer Video-CD die Abspieleinheiten repräsentieren, direkt die einzelnen Spielzeiten der Entries zugeordnet sind. Die TOC-Entry-Daten 12 befinden sich in dem Lead-In-Track der Video-CD sowie in einem Speicherbereich Entries.VCD. Die TOC-Entry-Daten 12 werden der externen Schnittstelle 4 der Wandlerschaltung 2 vor dem Abspielen der Video-CD in einer Einlesephase der Video-CD übermittelt. Die Wandlerschaltung 2 wandelt die TOC-Entry-Daten 12 nun so um, daß sie zu der TOC einer Audio-CD kompatibel sind, und werden als TOC-Track-Daten 9 dem Steuergerät 5 übermittelt. Diese TOC-Track-Daten 9 kann das Steuergerät 5 nun weiterverarbeiten und ein entsprechendes Inhaltsverzeichnis der Video-CD auf einem Display anzeigen.

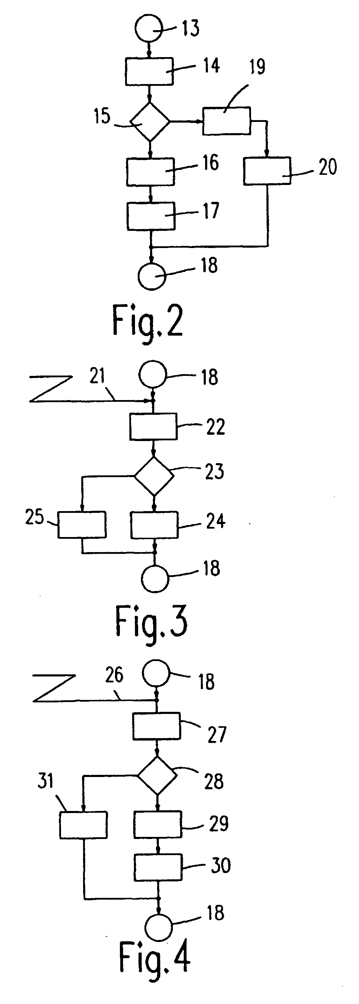

Fig. 2 zeigt ein Flußablaufdiagramm eines Einlese-Algorithmus, der in der Wandlerschaltung 2 als Software-Algorithmus implementiert ist. Dieser Algorithmus wird immer dann ausgeführt, wenn eine CD in das elektronische Gerät eingeschoben wird.

Ein erster Block 13 repräsentiert das Ereignis "CD-Ein", d.h. daß eine CD in das elektronische Gerät 1 eingeschoben bzw. eingefahren worden ist. In dem nachfolgenden Block 14 erfolgt das Einlesen des Lead-In-Tracks, in welchem u.a. eine Kennung vorhanden ist, ob es sich um eine Audio-CD oder um eine Video-CD handelt. Im nachfolgenden Block 15 wird anhand des eingelesenen Lead-In-Tracks entschieden, ob es sich um eine Audio-CD oder um eine Video-CD handelt. Ist eine Audio-CD vorhanden, so fährt der Algorithmus mit dem Block 16 fort, in dem die TOC der Audio-CD eingelesen wird. Diese TOC der Audio-CD wird dann im Block 17 an das Steuergerät 5 übermittelt. Danach geht die Wandlerschaltung in einen Wartezustand 18 über, in dem darauf gewartet wird, daß der externen Schnittstelle 3 der Wandlerschaltung 2 Track-Kommandos 6 für den Zugriff auf einzelne Tracks übermittelt werden. Wird im Block 15 festgestellt, daß es sich um eine Video-CD handelt, so wird im Block 19 der Speicherbereich Entries. VCD der Video-CD eingelesen. Dieser Speicherbereich Entries. VCD enthält Informationen über die Zuordnung zwischen den einzelnen Tracks und den Entries sowie über die Spielzeit der einzelnen Tracks bzw. Entries. Es ist jedoch keine TOC vorhanden, welche zu der TOC einer Audio-CD kompatibel ist. Im Block 20 wird daher aus den Informationen des Speicherbereiches Entries. VCD und des Lead-In-Tracks eine TOC der Video-CD generiert, welche kompatibel zu der TOC einer Audio-CD ist und demgemäß auch von einem Steuergerät, welches nur Audio-CD-TOC's einlesen kann, weiterverarbeitet werden kann. Nach dieser Generierung der "Audio-CD-kompatiblen Video-TOC" geht die Wandlerschaltung 2 in den Wartezustand des Blocks 18 über und wartet auf Track-Kommandos des Steuergerätes 5.

Fig. 3 zeigt das Flußablaufdiagramm des Software-Algorithmus der Wandlerschaltung 2 bei einem Zugriff auf einen Track, wobei in dem Initialisierungsprozeß gemäß Fig. 2 eine Audio-CD erkannt worden ist.

Der Block 18 repräsentiert eine Warteposition des Software-Algorithmus und ist identisch dem Block 18 aus Fig. 2. Tritt nun in der Wartestellung 18 das Ereignis 21 auf, daß von dem Steuergerät 5 ein Track-Kommando 6 an die Wandlerschaltung 2 übermittelt wird, so wird im Block 22 zunächst überprüft, ob es sich um ein gültiges Track-Kommando handelt. Diese Entscheidung wird im Block 23 durchgeführt. Handelt es sich um ein gültiges Track-Kommando, so wird im Block 24 der Zugriff auf den entsprechenden Track durchgeführt und nachfolgend dieser Track von dem elektronischen Gerät wiedergegeben. Danach geht der Algorithmus wieder in den Wartezustand 18 über. Wird im Block 23 entschieden, daß es sich um ein ungültiges Track-Kommando handelt, so wird im Block 25 ein Übertragungsfehler an das Steuergerät 5 übermittelt, und dem Benutzer kann z.B. mittels des Displays mitgeteilt wirden, daß der Zugriff ungültig war. Dies könnte z.B. der Fall sein, wenn auf einen Track 10 zugegriffen werden soll, die entsprechende CD aber nur die Tracks 1 bis 8 aufweist. Nach dem Übertragen der Fehlermeldung geht der Software-Algorithmus ebenfalls wieder in den Wartezustand 18 über und wartet auf neue Track-Kommandos.

Fig. 4 zeigt das Flußablaufdiagramm des Software-Algorithmus der Wandlerschaltung 2, wobei bereits eine Video-CD mittels des Algorithmus gemäß Fig. 2 eingelesen worden ist und sich der Software-Algorithmus in dem Wartezustand 18 gemäß Fig. 2 befindet.

Der Software-Algorithmus verläßt den Wartezustand 18, wenn als Ereignis 26 ein Track-Kommando 6 von dem Steuergerät 5 an die Wandlerschaltung 2 übertragen wird. Zunächst wird im Block 27 überprüft, ob das übermittelte Track-Kommando 6 gültig ist. Diese Entscheidung wird im Block 28 durchgeführt. Wird im Block 28 festgestellt, daß das Track-Kommando gültig ist, so werden im Block 29 die Track-Kommandos 6 in die Entry-Kommandos 7 umgewandelt und nachfolgend im Block 30 der Zugriff auf die jeweiligen Entries der Video-CD durchgeführt. Nach dem Zugriff auf das jeweilige Entry der Video-CD geht der Software-Algorithmus wieder in den Wartezustand 18 über. Wird im Block 28 festgestellt, daß das Track-Kommando 6 ungültig ist, so wird im Block 31 eine Übertragungsfehlermeldung an das Steuergerät 5 übertragen. Danach geht der Software-Algorithmus ebenfalls in den Wartezustand 18 über und wartet wieder auf ein neues Track-Kommando, das dann im Block 29 gegebenenfalls wieder in ein Entry-Kommando umgewandelt wird.

Mit der vorliegenden Erfindung wird eine Möglichkeit aufgezeigt, CD-Multinorm-Abspielgeräte (Single-CD-Abspielgeräte sowie CD-Wechsler), die in der Lage sind, verschiedene CD-Typen (Audio-CD's, Video-CD's, CD-I, CD-ROM) wiederzugeben, mit den gleichen Steuerinformationen (Kommandosequenzen) bezüglich der einzelnen Abspieleinheiten anzusteuern. Es ist möglich, die gleichen Kommandosequenzen zu verwenden, unabhängig davon, ob z.B. gerade eine Video-CD oder eine Audio-CD abgespielt wird. Mit der Erfindung wird ein objektorientierter Ansatz verfolgt, d.h. die einheitlichen Kommandosequenzen des Steuergerätes werden sofort an der externen Schnittstelle des elektronischen Gerätes in Kommandosequenzen umgewandet, welche die Abspieleinheiten des gerade zur Abspielung vorgesehenen CD-Typs ansteuern können. Daher ist es nicht notwendig, für jeden CD-Typ ein spezifisches Ansteuerprogramm bereitzuhalten.

Insbesondere läßt sich das erfindungsgemäße elektronische Gerät auch schon von auf dem Markt befindlichen Steuergeräten ansteuern, welche lediglich zur Ansteuerung von CD-Audio-Geräten ausgelegt sind. Dies ist insbesondere bei Autoradios der Fall, welche vielfach einen Ansteueranschluß für ein CD-Audio-Gerät aufweisen. Diese Autoradios können nun ohne weitere Modifikation auch das erfindungsgemäße elektronische Gerät ansteuern.

## Patentansprüche

1. Elektronisches Gerät zur Wiedergabe von auf Informationsplatten einer ersten Norm und wenigstens einer zweiten Norm gespeicherten Informationen, **dadurch gekennzeichnet,**
**daß** das elektronische Gerät (1) mittels erster Steuerinformationen (6) eines ersten Formats ansteuerbar ist, daß eine Wandlerschaltung (2) vorgesehen ist, welche bei einer Informationsplatte der zweiten Informationsplattennorm die ersten Steuerinformationen (6) in zweite Steuerinformationen (7) eines zweiten Formats umwandelt, so daß das elektronische Gerät (1) mittels der ersten Steuerinformationen (6) sowohl bei der Wiedergabe der Informationsplatten der ersten Norm als auch bei der Wiedergabe der Informationsplatten der zweiten Norm ansteuerbar ist.

2. Elektronisches Gerät nach Anspruch 1, **dadurch gekennzeichnet,**
**daß** die Wandlerschaltung (2) dazu vorgesehen ist, bei einer Informationsplatte der zweiten Informationsplattennorm zweite Statusinformationen (10, 11) des zweiten Formats in erste Statusinformationen (8) des ersten Formats umzuwandeln, so daß sowohl bei der Wiedergabe der Informationsplatten der ersten Norm als auch bei der Wiedergabe der Informationsplatten der zweiten Norm die ersten Statusinformationen (8) an einer Ausgangsschnittstelle (3) des elektronischen Gerätes zur Verfügung stellbar sind.

3. Elektronisches Gerät nach Anspruch 1 oder 2, **dadurch gekennzeichnet,**
**daß** die erste Norm die Norm des Compact Disc Digital Audio Systems ist und die zweite Norm die Norm des Compact Disc Video Systems ist.

4. Elektronisches Gerät nach einem der Ansprüche 1 bis 3, **dadurch gekennzeichnet,**
**daß** mittels der ersten Steuerinformationen (6) einzelne, auf der Informationsplatte gespeicherte Wiedergabeeeinheiten auswählbar sind.

5. Elektronisches Gerät nach einem der Ansprüche 1 bis 4, **dadurch gekennzeichnet,**
**daß** die Wandlerschaltung (2) dazu vorgesehen ist, bei einer Informationsplatte der zweiten Informationsplattennorm ein Inhaltsverzeichnis der Informationsplatte (TOC) zu erstellen, welches die Gesamtanzahl der Wiedergabeeinheiten und die Gesamtspielzeit aller Wiedergabeeinheiten aufweist.

6. Verwendung eines elektronischen Gerätes nach einem der Ansprüche 1 bis 5 zum Empfang der ersten Steuerinformationen (6) von einem Autoradio (5).

7. Autoradiosystem mit einem elektronischen Gerät nach Anspruch 1.

8. CD-Wechsler mit einem elektronischen Gerät nach Anspruch 1.

## Claims

1. An electronic apparatus for reproducing information stored on information discs in accordance with a first standard and in accordance with at least a second standard, **characterized in that** the electronic apparatus (1) can be controlled by means of first control information (6) in accordance with a first format, there has been provided a converter circuit (2) which converts the first control information (6) in the case of an information disc in accordance with the second information-disc standard into second control information (7) in accordance with a second format, in such a manner that the electronic apparatus (1) can be controlled by means of the first control information (6) both when information discs in accordance with the first standard are played and when information discs in accordance with the second standard are played.

2. An electronic apparatus as claimed in Claim 1, **characterized in that** the converter circuit (2) is adapted to convert second status information (10, 11) in accordance with the second format into status information (8) in accordance with the second format in the case of an information disc in accordance with the second standard, in such a manner that the first status information (8) can be made available at an output interface (3) of the electronic apparatus both when information discs in accordance with the first standard are played and when information discs in accordance with the second standard are played.

3. An electronic apparatus as claimed in Claim 1 or 2, **characterized in that** the first standard is the Compact Disc Digital Audio System standard and the second standard is the Compact Disc Video System standard.

4. An electronic apparatus as claimed in any one of the Claims 1 to 3, **characterized in that** individual playing units stored on the information disc can be selected by means of the first control information (6).

5. An electronic apparatus as claimed in any one of the Claims 1 to 4, **characterized in that** the converter circuit (2) is adapted to generate a table of contents of the information disc (TOC) which specifies the total number of playing units and the overall playing time of all the playing units for an information disc in accordance with the second information-disc standard.

6. The use of an electronic apparatus as claimed in any one of the Claims 1 to 5 for receiving the first control information (6) from a car radio (5).

7. A car radio system comprising an electronic apparatus as claimed in claim 1.

8. A CD changer comprising an electronic apparatus as claimed in claim 1.

## Revendications

1. Appareil électronique de lecture d'informations enregistrées sur des disques d'information d'une première norme et d'au moins une deuxième norme, **caractérisé en ce que** l'appareil électronique (1) peut être commandé à l'aide de premières informations de commande (6) d'un premier format, qu'il est prévu un circuit convertisseur (2) qui convertit les premières informations de commande (6) en deuxièmes informations de commande (7) d'un deuxième format en cas de disques d'informations de la deuxième norme de disques d'informations de telle sorte que l'appareil électronique (1) puisse être commandé à l'aide des premières informations de commande (6, 7) à la fois pour la lecture des disques d'informations de la première norme et pour la lecture des disques d'informations de la deuxième norme.

2. Circuit électronique selon la revendication 1, **caractérisé en ce que** le circuit convertisseur (2) est prévu pour convertir en cas de disque d'informations de la deuxième norme de disques d'informations des deuxièmes informations d'état (10, 11) du deuxième format en premières informations d'état (8) du premier format de telle sorte que les premières informations d'état (8) puissent être fournies à une interface de sortie (3) de l'appareil électronique à la fois pour la lecture des disques d'informations de la première norme et pour la lecture des disques d'information de la deuxième norme.

3. Appareil électronique selon l'une des revendications 1 ou 2, **caractérisé en ce que** la première norme est la norme du système Compact Disc Digital Audio et la deuxième norme la norme du Compact Disc Video.

4. Appareil électronique selon l'une des revendications 1 à 3, **caractérisé en ce que** différentes unités de lecture enregistrées sur le disque d'informations peuvent être sélectionnées à l'aide des premières informations de commande (6).

5. Appareil électronique selon l'une des revendications 1 à 4, **caractérisé en ce que** le circuit convertisseur (2) est prévu pour créer une table des matières du disque d'informations (TOC) qui présente le nombre total des unités de lecture et le temps de lecture total de toutes les unités de lecture en cas de disque d'informations de la deuxième norme de disque d'informations.

6. Mise en oeuvre d'un appareil électronique selon l'une des revendications 1 à 5 pour la réception des premières informations de commande (6) par un autoradio (5).

7. Système autoradio avec un appareil électronique selon la revendication 1.

8. Chargeur CD avec un appareil électronique selon la revendication 1.
